(19) Europäisches Patentamt
European Patent Office
Office européen des brevets

(11) **EP 3 123 139 B1**

(12) **FASCICULE DE BREVET EUROPEEN**

(45) Date de publication et mention de la délivrance du brevet:
**23.05.2018 Bulletin 2018/21**

(51) Int Cl.:
***G01M 15/14*** *(2006.01)*

(21) Numéro de dépôt: **15717037.4**

(22) Date de dépôt: **26.03.2015**

(86) Numéro de dépôt international:
**PCT/FR2015/050785**

(87) Numéro de publication internationale:
**WO 2015/145085 (01.10.2015 Gazette 2015/39)**

(54) **PROCÉDÉ D'ESTIMATION DU CARACTÈRE NORMAL OU NON D'UNE VALEUR MESURÉE D'UN PARAMÈTRE PHYSIQUE D'UN MOTEUR D'AÉRONEF**

SCHÄTZVERFAHREN VON EINEM NORMALEN ODER NICHT NORMALEN KARAKTER EINES GEMESSENEN WERTES EINES PHYSISCHEN PARAMETERS VON EINEM MASCHINENMOTOR

METHOD FOR ESTIMATING THE NORMAL OR ABNORMAL CHARACTER OF A MEASURED VALUE OF A PHYSICAL PARAMETER OF AN AIRCRAFT MOTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.03.2014 FR 1452650**

(43) Date de publication de la demande:
**01.02.2017 Bulletin 2017/05**

(73) Titulaire: **Safran Aircraft Engines**
**75015 Paris (FR)**

(72) Inventeurs:
• **GOUBY, Aurélie**
  **77550 Moissy-Cramayel Cedex (FR)**
• **GEREZ, Valerio**
  **77550 Moissy-Cramayel Cedex (FR)**

(74) Mandataire: **Regimbeau**
**87 rue de Sèze**
**69477 Lyon Cedex 06 (FR)**

(56) Documents cités:
**FR-A1- 2 983 528     US-A1- 2005 049 832**

## Description

### DOMAINE TECHNIQUE GENERAL

La présente invention concerne le domaine des tests des équipements aéronautiques.

Plus précisément, elle concerne un procédé d'estimation du caractère normal ou non d'une valeur mesurée d'un paramètre physique d'un dispositif, en particulier un moteur d'aéronef.

### ETAT DE L'ART

Un banc d'essai est une plateforme permettant de mesurer les performances d'une machine d'essai (typiquement un moteur d'aéronef) lors de tests en conditions contrôlées afin d'observer son comportement. De nombreuses données sont acquises pendant de tels tests par des capteurs équipant le banc et/ou la machine d'essai, pour être reversées dans une base de données dédiée, appelée aussi base de données d'essais et nommée par la suite base d'essai. Par simplification on parlera par la suite des capteurs du banc, incluant de fait les capteurs équipant le moteur dans le cadre des essais.

Une machine d'essai est généralement soit un prototype en phase de développement que l'on souhaite tester (les données acquises sont alors utilisées par des bureaux d'études pour améliorer les machines et les mettre au point), soit un produit fini pour lequel on souhaite vérifier les spécifications et la fiabilité (les données acquises sont alors utilisées par les équipes qualité). Alternativement la machine d'essai peut être soit un moteur complet soit un composant d'un moteur pour des essais partiels.

Cependant, suite à des défauts d'un ou plusieurs capteurs d'un banc et/ou de la machine d'essai, il arrive fréquemment que des données acquises présentent des valeurs anormales ou aberrantes. La base de données d'essais se retrouve alors « polluée » par ces données obtenues lors d'une acquisition « défaillante ».

Cela pose problème aux utilisateurs de la base (en particulier les bureaux d'études), qui se servent de toutes les données stockées pour réaliser notamment des comparaisons de performances. Ces données peuvent être également utilisées pour recaler des modèles numériques du moteur au banc.

De plus pendant l'essai lui-même il est important de détecter rapidement tout capteur défectueux, dans la mesure où la décision de stopper l'essai peut alors être prise selon la gravité de l'anomalie. En effet, les essais sont très couteux et il est donc important d'optimiser ces derniers et notamment leur rendu.

Le brevet français FR2965915 décrit un exemple de méthode de surveillance en temps réel de capteurs d'un banc d'essai qui permet de signaler une panne de capteur, mais celle-ci est incapable de détecter une dérive de la qualité des mesures en elle-même. De plus, les méthodes connues sont indissociables du banc d'essai et ne permettent pas d'identifier à postériori des mesures anormales parmi les mesures stockées dans la base. Le brevet FR2983528 décrit un procédé d'estimation du caractère normal ou non d'une valeur mesurée par un capteur. Il serait donc souhaitable de disposer d'une façon fiable, efficace, et reproductible de contrôler des mesures de paramètres associées à un moteur permettant d'identifier sans difficulté une mesure aberrante dans un ensemble de mesures.

### PRESENTATION DE L'INVENTION

La présente invention propose selon un premier aspect un procédé d'estimation du caractère normal ou non d'une valeur mesurée par un capteur d'un paramètre physique d'un dispositif pour une valeur d'un paramètre de fonctionnement dudit dispositif, une pluralité de couples définissant chacun une valeur de référence du paramètre physique pour une valeur du paramètre de fonctionnement étant stockés dans une base de données stockée sur des moyens de stockage de données, le procédé étant caractérisé en ce qu'il comprend la mise en oeuvre par des moyens de traitement de données d'étapes de :

> (a) Calcul en fonction d'un modèle de régression associé à ladite pluralité de couples d'une valeur estimée du paramètre physique pour la valeur du paramètre de fonctionnement ;
> (b) Calcul d'un résidu associé ;
> (c) Calcul en fonction d'un modèle de variance associé à ladite pluralité de couples d'une valeur estimée d'une variance du paramètre physique pour la valeur du paramètre de fonctionnement ;
> (d) Calcul d'un score d'anomalie de la valeur mesurée en fonction du résidu, de la valeur estimée de la variance, et d'une valeur moyenne de résidu pour ladite pluralité de couples ;
> (e) Comparaison du score d'anomalie de la valeur mesurée avec un seuil en nombre d'écart type ;
> (f) si le score d'anomalie est supérieur audit seuil, signalement de la mesure comme anormale sur des moyens d'interface.

L'estimation de la variance en fonction du paramètre de fonctionnement permet de s'affranchir d'une variation de l'incertitude de mesure (dépendante de contexte d'utilisation). L'intervalle de confiance construit (tolérance $\sigma$ sur le $Z_{score}$) autour du modèle de régression est ainsi plus réaliste qu'une variance constante et la détection des points anormaux d'autant plus précise. Le modèle d'alarme gagne ainsi en efficacité.

Selon d'autres caractéristiques avantageuses et non limitatives :

- le procédé comprend une phase préalable de traitement de ladite pluralité de couples de la base de données, comprenant la mise en oeuvre par des moyens de traitement de données d'étapes de :

(a0) détermination dudit modèle de régression associé à ladite pluralité de couples par une régression modélisant la valeur *y* du paramètre physique en fonction de la valeur *x* du paramètre de fonctionnement à partir de l'ensemble $\{x_i; y_i\}_{i \in [\![1,n]\!]}$, où $x_i; y_i$ désigne les valeurs d'un couple stocké dans la base de données ;

(a1) pour chacun des couples, calcul d'une valeur estimée du paramètre physique et d'un résidu associé ;

(a2) calcul de la moyenne desdits résidus ;

(a3) calcul sur une fenêtre glissante de taille w d'un ensemble de valeurs de variance résiduelle chacune associée à une valeur du paramètre de fonctionnement d'un couple ;

(a4) détermination dudit modèle de variance associé à ladite pluralité de couples par une régression modélisant la valeur *var* de la variance résiduelle en fonction de la valeur *x* du paramètre de fonctionnement à partir de l'ensemble $\{x_j; var_j\}_{j \in [\![1,n-w]\!]}$, où $var_j$ désigne une valeur de variance résiduelle calculée et $x_j$ la valeur du paramètre de fonctionnement associée.

- la phase préalable comprend une étape (a5) de détermination en fonction dudit modèle de variance déterminé d'une zone de confiance autour dudit modèle de régression déterminé, et d'affichage sur les moyens d'interface de ladite zone de confiance ;
- la zone de confiance est définie par une enveloppe supérieure de formule $f(x) + \sigma \times \sqrt{g(x)}$, et une enveloppe inférieure de formule $f(x) - \sigma \times \sqrt{g(x)}$, où *f* est le modèle de régression et *g* est le modèle de variance ;
- le score d'anomalie est obtenu par la formule $Z_{score} = \left| \dfrac{res_{exec} - mean}{\sqrt{\widehat{var}_{exec}}} \right|$, où $res_{exec}$ est le résidu associé à la valeur mesurée du paramètre physique, $\widehat{var}_{exec}$ la valeur estimée de la variance, et *mean* est la valeur moyenne de résidu pour ladite pluralité de couples ;
- ledit dispositif est un moteur d'aéronef ;
- ledit paramètre physique est choisi parmi une pression, une température, une vitesse d'écoulement d'un fluide, et un niveau de bruit associés au moteur ;
- ledit paramètre de fonctionnement est choisi parmi un régime et un débit de carburant associés au moteur ;
- le moteur est disposé dans un banc d'essai comprenant le capteur, l'étape (e) comprenant l'arrêt du banc d'essai si la mesure est signalée comme anormale ;
- l'étape (e) comprend l'ajout du couple formé de la valeur mesurée du paramètre physique et de la valeur du paramètre de fonctionnement associée à ladite base de données de couples si la mesure n'est pas signalée comme anormale.

Selon un deuxième aspect, l'invention concerne un équipement d'estimation du caractère normal ou non d'une valeur mesurée par un capteur d'un paramètre physique d'un dispositif pour une valeur d'un paramètre de fonctionnement dudit dispositif, comprenant des moyens de traitement de données, des moyens de stockage de données stockant dans une base de données une pluralité de couples définissant chacun une valeur de référence du paramètre physique pour une valeur d'un paramètre de fonctionnement, et des moyens d'interface, l'équipement étant caractérisé en ce que les moyens de traitement de données sont configurés pour mettre en oeuvre :

- Un module de calcul en fonction d'un modèle de régression associé à ladite pluralité de couples d'une valeur estimée du paramètre physique pour la valeur du paramètre de fonctionnement ;
- Un module de calcul d'un résidu associé ;
- Un module de calcul en fonction d'un modèle de variance associé à ladite pluralité de couples d'une valeur estimée d'une variance du paramètre physique pour la valeur du paramètre de fonctionnement ;
- Un module de calcul d'un score d'anomalie de la valeur mesurée en fonction du résidu, de la valeur estimée de la variance, et d'une valeur moyenne de résidu pour ladite pluralité de couples ;
- Un module de comparaison du score d'anomalie de la valeur mesurée avec un seuil en nombre d'écart type ;
- Une module d'émission d'un signal d'alarme sur les moyens d'interface signalant la mesure comme anormale si le score d'anomalie est supérieur audit seuil $\sigma$.

Selon d'autres caractéristiques avantageuses et non limitatives :

- le module de traitement de données est en outre configuré pour mettre en oeuvre :

  - Un module de détermination dudit modèle de régression associé à ladite pluralité de couples par une régression modélisant la valeur *y* du paramètre physique en fonction de la valeur *x* du paramètre de fonctionnement à partir de l'ensemble $\{x_i; y_i\}_{i \in [\![1,n]\!]}$, où $x_i; y_i$ désigne les valeurs d'un couple stocké dans la base de données ;
  - Un module de calcul pour chacun des couples d'une valeur estimée du paramètre physique et d'un résidu associés ;

- Un module de calcul de la moyenne desdits résidus ;
- Un module de calcul sur une fenêtre glissante de taille *w* d'un ensemble de valeurs de variance résiduelle chacune associée à une valeur du paramètre de fonctionnement d'un couple ;
- Un module de détermination dudit modèle de variance associé à ladite pluralité de couples par une régression modélisant la valeur *var* de la variance résiduelle en fonction de la valeur *x* du paramètre de fonctionnement à partir de l'ensemble $\{x_j; var_j\}_{j \in [\![1, n-w]\!]}$, où $var_j$ désigne une valeur de variance résiduelle calculée et $x_j$ la valeur du paramètre de fonctionnement associée.

Selon un troisième aspect, l'invention concerne un système comprenant :

- un banc d'essai comprenant un capteur et adapté pour recevoir un dispositif ;
- un équipement selon le deuxième aspect de l'invention d'estimation du caractère normal ou non d'une valeur mesurée par le capteur d'un paramètre physique dudit dispositif pour une valeur d'un paramètre de fonctionnement dudit dispositif.

Selon un quatrième et un cinquième aspect, l'invention concerne un produit programme d'ordinateur comprenant des instructions de code pour l'exécution d'un procédé selon le premier aspect de l'invention d'estimation du caractère normal ou non d'une valeur mesurée par un capteur d'un paramètre physique d'un dispositif pour une valeur d'un paramètre de fonctionnement dudit dispositif ; et un moyen de stockage lisible par un équipement informatique sur lequel un produit programme d'ordinateur comprend des instructions de code pour l'exécution d'un procédé selon le premier aspect de l'invention d'estimation du caractère normal ou non d'une valeur mesurée par un capteur d'un paramètre physique d'un dispositif pour une valeur d'un paramètre de fonctionnement dudit dispositif.

PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

- la figure 1 représente un exemple d'environnement dans lequel le procédé selon l'invention est mis en oeuvre ;
- les figures 2a-2b illustrent les étapes de deux phases d'un exemple du procédé selon l'invention ;
- les figures 3a-3f représentent des affichages sur une interface de données obtenus lors des différentes étapes du procédé selon l'invention.

DESCRIPTION DETAILLEE

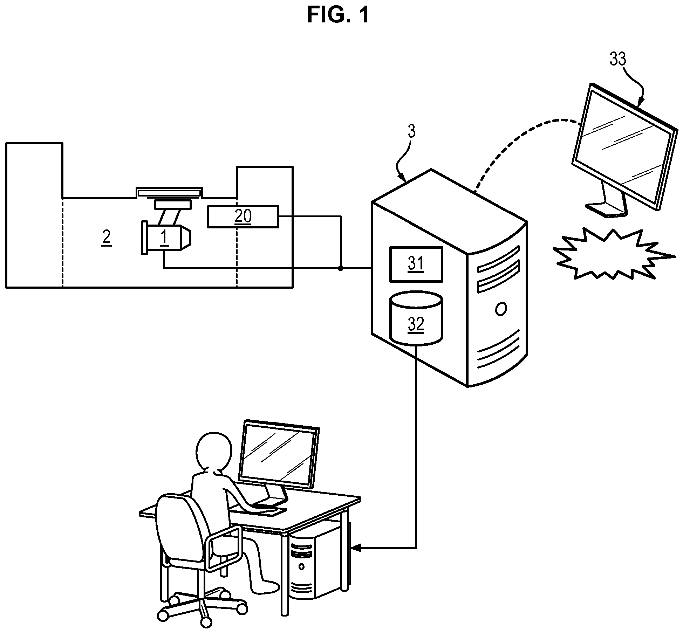

En référence à la **figure 1,** le présent procédé est un procédé d'estimation du caractère normal ou non d'une valeur $y_{exec}$ mesurée par un capteur 20 d'un paramètre physique d'un dispositif commandé 1 pour une valeur $x_{exec}$ d'un paramètre de fonctionnement dudit moteur 1. Le dispositif commandé 1 est en particulier un moteur 1 d'aéronef, typiquement tout ou partie d'une turbomachine, en particulier double flux.

Bien que la présente description prendra par la suite l'exemple préféré d'une turbomachine (en vol ou en banc d'essai), on comprendra toutefois que l'invention ne lui est pas limitée, et par « dispositif », on entendra tout système physique recevant au moins un paramètre de fonctionnement en « entrée », qu'il est nécessaire de surveiller à l'aide de capteurs et dont le comportement peut être complexe à modéliser directement. La dénomination de machine d'essai est donnée lorsque le dispositif est en test par exemple sur un banc (et non en fonctionnement réel).

Le présent procédé peut ainsi être mis en oeuvre pour tout dispositif de propulsion terrestre ou non.

En dehors des systèmes de propulsions, on comprendra aisément que le présent procédé peut trouver d'autres applications dans l'aéronautique, notamment dans les systèmes de train d'atterrissage, ou tout autre dispositif matériel complexe ayant besoin d'un suivi de bon fonctionnement.

Dans un autre domaine, par exemple le domaine ferroviaire, on peut citer des systèmes de freinage des trains, ou tout autre organe de sécurité d'un véhicule.

D'autres systèmes de fabrication ou d'expérimentation peuvent également être concernés par l'invention.

Le présent procédé peut s'appliquer à n'importe quelle surveillance de mesure (y compris lors de la vie du dispositif), mais de façon préférée, on prendra l'exemple de mesures d'essai : le moteur 1 (ou autre dispositif) est disposé dans un banc d'essai 2 auquel le capteur 20 est connecté. Le banc d'essai 2 est conçu pour simuler un fonctionnement en conditions réelles du moteur 1. L'objectif de la présente invention est de valider ou non une mesure réalisée lors d'un essai. Ainsi une le caractère normal d'une mesure est directement lié à sa validité. Une mesure déclarée invalide sera considérée comme anormale.

Le paramètre de fonctionnement (valeur *x*) est une variable « explicative » ou « prédictive », par opposition au paramètre physique mesuré (valeur *y*) qui est une variable « à expliquer » ou «à prédire». En d'autres termes, la valeur *x* du paramètre de fonctionnement est la cause, lorsque la valeur *y* du paramètre physique est la conséquence.

Plus précisément, le paramètre de fonctionnement est une valeur contrôlée associée au moteur 1 sur laquelle soit un utilisateur peut agir, soit l'environnement influe. En d'autres termes, c'est une commande. Dans la suite de la présente description, on prendra l'exemple du régime moteur (c'est-à-dire le nombre de rotations effectuées par un rotor du moteur 1 par unité de temps), mais on comprendra que de nombreux autres paramètres de fonctionnement, tel que le débit de carburant injecté dans le moteur 1, une température du carburant injecté dans le moteur 1, une pression ambiante autour du moteur 1, et une température ambiante autour du moteur 1, peuvent être surveillés. Ce paramètre est un paramètre d'entrée choisi pour le moteur.

Le paramètre physique est représentatif d'une grandeur physique caractéristique d'un comportement attendu du moteur 1 en réponse à l'application du paramètre de fonctionnement, grandeur physique à laquelle le capteur 20 est adapté. On comprend qu'une pluralité de capteurs 20 adaptés pour différentes grandeurs physiques peut être prévue. En particulier, ce paramètre physique peut être une pression en un point du moteur 1, une température interne en un point du moteur 1, la vitesse d'écoulement d'un fluide en un point du moteur 1, un niveau de bruit généré par le moteur 1, une densité de carburant dans le moteur 1, etc. L'homme du métier choisira le type de grandeur physique à mesurer en fonction des objectifs de l'essai. Dans la suite de la présente description, on prendra l'exemple d'une pression mesurée par un capteur de pression 20.

Un couple ($x$; $y$) désigne une acquisition ponctuelle : pour une valeur $x$ du paramètre de fonctionnement, une valeur $y$ du paramètre physique est mesurée par le capteur 20.

Une pluralité de couples $(x_i; y_i)_{i \in [\![1,n]\!]}$ définissant chacun une valeur de référence $y_i$ du paramètre physique pour une valeur $x_i$ du paramètre de fonctionnement sont stockés dans une base de données (qui constitue la base de données d'essais évoquée précédemment) elle-même stockée sur des moyens de stockage de données 32. Par valeurs « de référence », on entend qu'elles sont acquises pendant des phases stabilisées d'essais, c'est-à-dire qu'elles peuvent être considérées comme normales. Des éventuelles valeurs anormales ont déjà été supprimées de la base.

Les moyens de stockage de données 32 (qui sont typiquement un disque dur) et des moyens de traitement de données 31 (par exemple un processeur) sont soit ceux d'un équipement 3 connecté au capteur 20 (comme représenté sur la figure 1) soit directement intégrés au banc d'essai 2. L'équipement 3 (ou un autre équipement) est équipé de moyens d'interfaces 33 (tels qu'un clavier et un écran) pour interagir avec la base de données, et en particulier pour l'affichage des résultats (voir plus loin).

Le couple ($x_{exec}$ ; $y_{exec}$) désigne la mesure « surveillée », c'est-à-dire celle pour laquelle on cherche on savoir si la valeur $y_{exec}$ mesurée est normale ou non.

Cette mesure surveillée peut être aussi bien une mesure obtenue en temps réel (en particulier dans un fonctionnement lors de la vie du moteur) ou bien une mesure en temps différé (couple ($x_{exec}$ ; $y_{exec}$) déjà stocké dans la base de données et placé en attente).

On peut disposer d'un système de requête et d'analyse de la base de données d'essais en temps réel mis en oeuvre par les moyens de traitement de données 31.

*Phase d'apprentissage*

Le présent procédé comprend deux phases. La première est une phase d'apprentissage et la seconde est une phase d'exécution. De façon préférée, la phase d'apprentissage est mise en oeuvre préalablement de sorte à créer les modèles qui seront décrits plus loin (et le cas échéant les stocker sur les moyens de stockage de données 32), et la phase d'exécution est ensuite mise en oeuvre à chaque nouvelle acquisition d'une mesure. C'est la phase d'exécution qui permet l'estimation du caractère normal ou non d'une valeur $y_{exec}$ mesurée, objet de l'invention. La phase d'apprentissage peut être relancée de temps à autres pour mettre à jour les modèles.

Alternativement, il est tout à fait possible de ne pas faire de faire d'apprentissage préalable et de déterminer les modèles en temps réel à chaque mise en oeuvre de la phase d'exécution.

On décrira dans la suite de la présente description les deux phases.

La phase d'apprentissage peut être vue comme un ensemble d'étapes de traitement des seules données de la base (i.e. indépendamment du couple ($x_{exec}$ ; $y_{exec}$)).

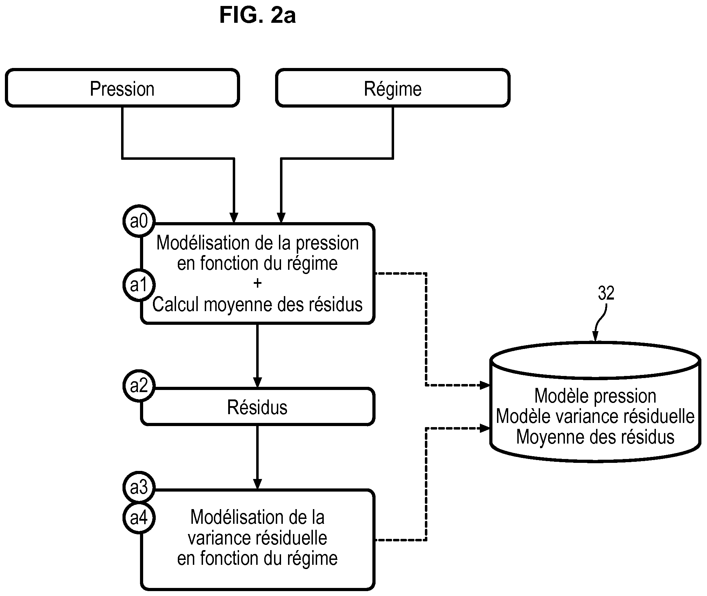

En référence à la **figure 2a** (qui utilise l'exemple des paramètres régime/pression), la phase d'apprentissage commence par une étape (a0) de détermination d'un modèle de régression associé à ladite pluralité de couples $(x_i; y_i)_{i \in [\![1,n]\!]}$ par régression modélisant $y$ en fonction de $x$ sur l'ensemble des valeurs des couples $(x_i; y_i)_{i \in [\![1,n]\!]}$. Ce modèle de régression va être utilisé dans la phase d'exécution.

La régression désigne un ensemble de méthodes statistiques bien connues de l'homme du métier pour analyser la relation d'une variable (ici $y$) par rapport à une ou plusieurs autres (ici $x$). L'étape (a0) consiste en d'autres termes à déterminer une fonction $f$ permettant d'approximer au mieux les valeurs $y_i$ en fonction de valeurs $x_i$, pour un type de lien donné. On connait ainsi des régressions linéaire, polynomiale, exponentielle, logarithmique, etc.

Le choix du type de lien utilisé est avantageusement fait en fonction de l'allure de la courbe et peut se faire de manière automatique par optimisation en maximisant un coefficient de détermination, par exemple de la façon décrite dans la demande de brevet FR2939928.

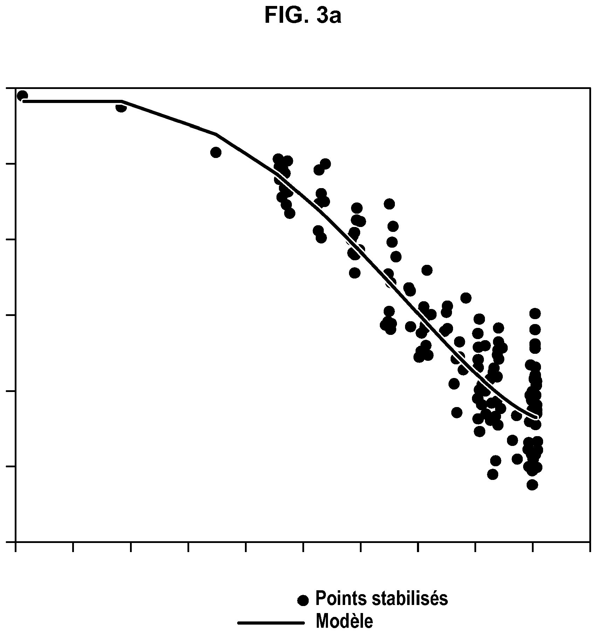

La **figure 3a** illustre le nuage de points formé par les n couples $\{x_i;\ y_i\}_{i\in[\![1,n]\!]}$ et le modèle obtenu par régression.

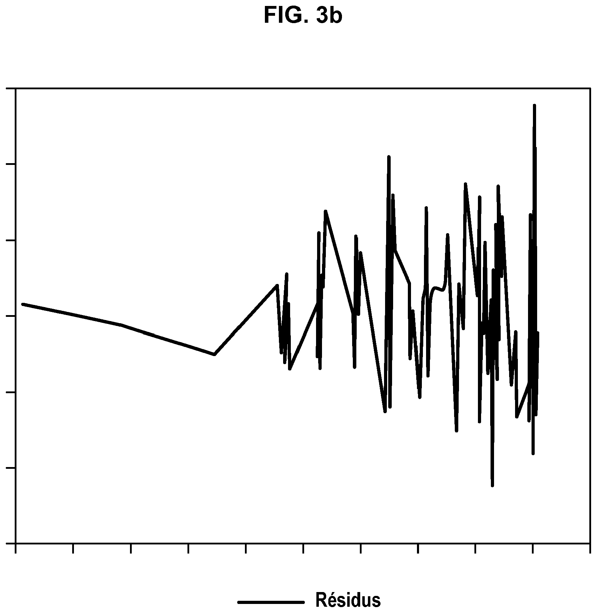

Dans une deuxième étape (a1), la phase d'apprentissage comprend le calcul, pour chacun des couples, d'une valeur estimée $\hat{y}_i$ du paramètre physique et d'un résidu $res_i$ associés. Le résidu est l'écart entre une valeur estimée et une valeur mesurée. A partir du modèle de régression, on obtient simplement ces valeurs par les formules $\hat{y}_i = f(x_i)$, et $res_i = y_i - \hat{y}_i$, pour $i \in [\![1,n]\!]$. La **figure 3b** illustre les résidus du modèle obtenus.

Dans une étape (a2), la moyenne desdits résidus est calculée :

$$mean = \frac{1}{n}\sum_{i=1}^{n} res_i.$$

Une fois le modèle de régression créé, les moyens de traitement de données 31 déterminent un autre modèle utilisé dans la phase d'exécution : il s'agit du modèle de variance.

Ce modèle également associé à ladite pluralité de couples $(x_i;\ y_i)_{i\in[\![1,n]\!]}$ se calcule typiquement en deux étapes consécutives. Dans une étape (a3) est calculé un ensemble de valeurs $(var_j)_{j\in[\![1,n\text{-}w+1]\!]}$ de variance résiduelle, ensemble de valeurs qui va permettre la mise en oeuvre d'une régression dans l'étape (a4) pour obtenir le modèle de variance.

De façon connue, la variance se calcule comme la moyenne des résidus au carré. L'obtention d'une pluralité de valeurs de variance se fait grâce à une « fenêtre glissante » de taille $w$ ($w$ est un paramètre prédéterminé de l'algorithme, il est de façon préférée choisi d'une taille suffisante pour éviter un problème d'évasement du tube de confiance, voir plus loin. A titre d'exemple, on peut prendre 10% du nombre d'échantillons). Plus précisément, chaque valeur $var_j$ de variance est calculée sur un sous-ensemble (indices $j$ à $j + w - 1$) de l'ensemble des couples $(x_i;\ y_i)_{i\in[\![1,n]\!]}$. En particulier,

$$var_j = \frac{1}{w-2}\sum_{i=j}^{j+w-1}(res_i)^2 .$$

Similairement à ce qui est fait dans l'étape (a0), le modèle de variance associé à ladite pluralité de couples $(x_i;\ y_i)_{i\in[\![1,n]\!]}$ est déterminé dans l'étape (a4) par régression modélisant $var$ en fonction de $x$. En d'autres termes, dans cette étape, les moyens de traitement de données 31 déterminent la fonction $g$ telle que

$$\widehat{var}_j = g(x_j),\ \text{pour } j \in [\![1, n\text{ - }w + 1]\!].$$

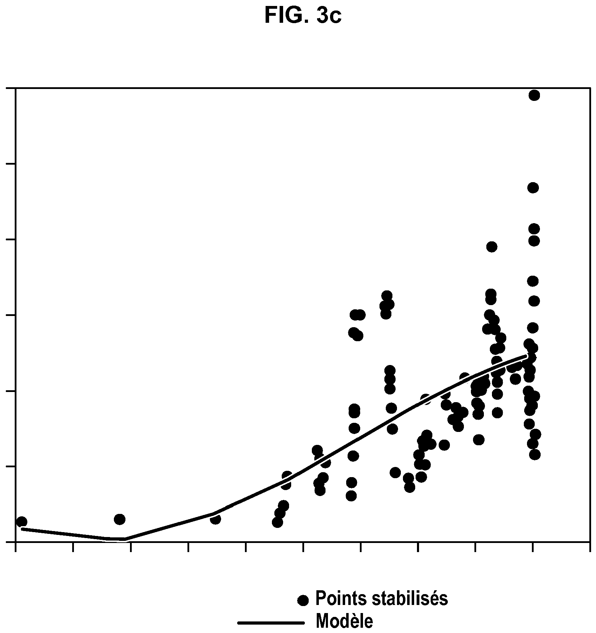

La **figure 3c** illustre le nuage de points formé par les $n$ - $w$ + 1 couples $\{x_i;\ var_j\}_{j\in[\![1,n\text{-}w+1]\!]}$ et le modèle obtenu par régression.

Dans une étape (a5) optionnelle, la phase d'apprentissage peut comprendre la définition d'un « tube de confiance » (i.e. une zone de confiance) autour du modèle de régression. Ce tube est constitué d'une enveloppe supérieure et d'une enveloppe inférieure. Entre ces deux enveloppes, un point associé à un couple $(x;\ y)$ est considéré normal, et non à l'extérieur, comme l'on verra plus loin.

Le tube de confiance est défini par un écart d'amplitude $\left| \sigma \times \sqrt{g} \right|$ par rapport au modèle de régression, où un seuil $\sigma$ en nombre d'écart type (voir plus loin). Comme expliqué avant, ce tube définit un intervalle de confiance fonction de la variance, ce qui augmente le réalisme des résultats : le nombre de faux négatifs et de faux positifs est sensiblement réduit.

L'équation de l'enveloppe supérieure est donnée par la formule $f(x) + \sigma \times \sqrt{g(x)},$ et celle de l'enveloppe inférieure par la formule $f(x)$ - $\sigma \times \sqrt{g(x)}.$

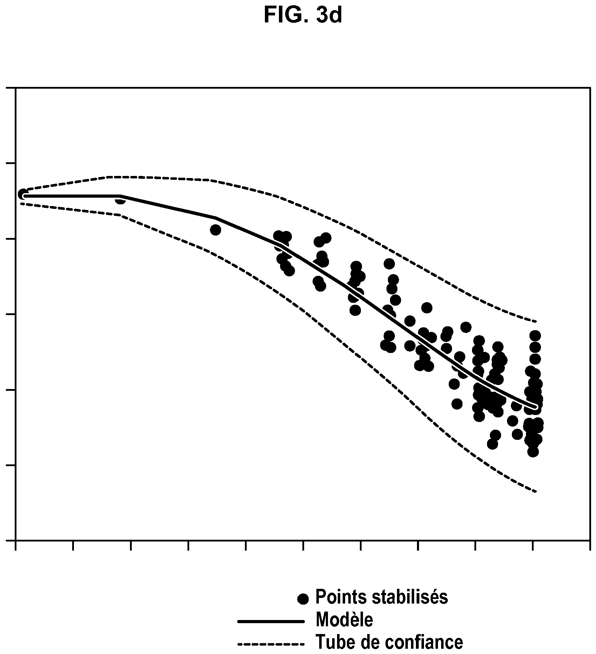

Le tube de confiance est de façon préférée ajouté à une représentation du nuage de points formé par les $n$ couples $(x_i;\ y_i)_{i\in[\![1,n]\!]}$ et du modèle obtenu par régression (du type de la figure 3a) de sorte à donner la **figure 3d.** Comme l'on verra plus loin, ce tube permet d'anticiper le résultat de la phase d'exécution et d'illustrer de façon très visuelle (et compréhensible y compris par des non-initiés) si une mesure est normale ou pas.

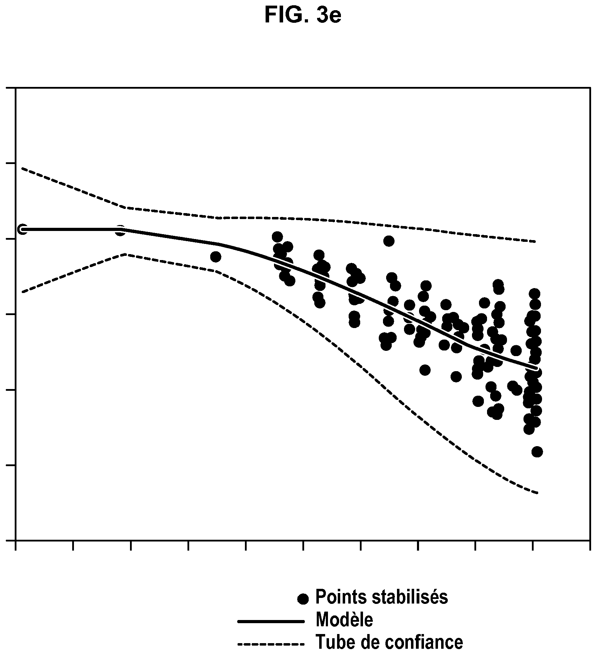

On notera que la répartition des points $(x_i;y_i)_{i\in[\![1,n]\!]}$ n'est pas égale suivant le paramètre $x$. Dans l'exemple où le paramètre de fonctionnement est le régime, il y a en effet beaucoup plus de mesure à haut régime qu'à bas régime. Cette répartition inégale peut entraîner un évasement du tube de confiance à son origine, comme représenté sur l'exemple de la **figure 3e,** si le paramètre w est mal choisi.

De façon préférée, le paramètre $w$ est choisi suffisamment élevé pour que la fonction $g$ soit croissante. Pour cela, les étapes (a3) puis (a4) peuvent être itérativement répétées avec des valeurs croissantes de $w$ jusqu'à cette condition soit vérifiée.

*Phase d'exécution*

Comme expliqué précédemment, la phase d'apprentissage représente un travail préparatoire pour accélérer la phase d'exécution (qui correspond au coeur du présent procédé selon l'invention). La phase d'apprentissage peut alternativement être réalisée « en même temps » que la phase d'exécution. On fera dans la description de cette partie référence à toutes les formules associées décrites précédemment.

Cette phase permet d'estimer le caractère normal ou non d'une valeur $y_{exec}$ mesurée du paramètre physique pour une valeur $x_{exec}$ du paramètre de fonctionnement.

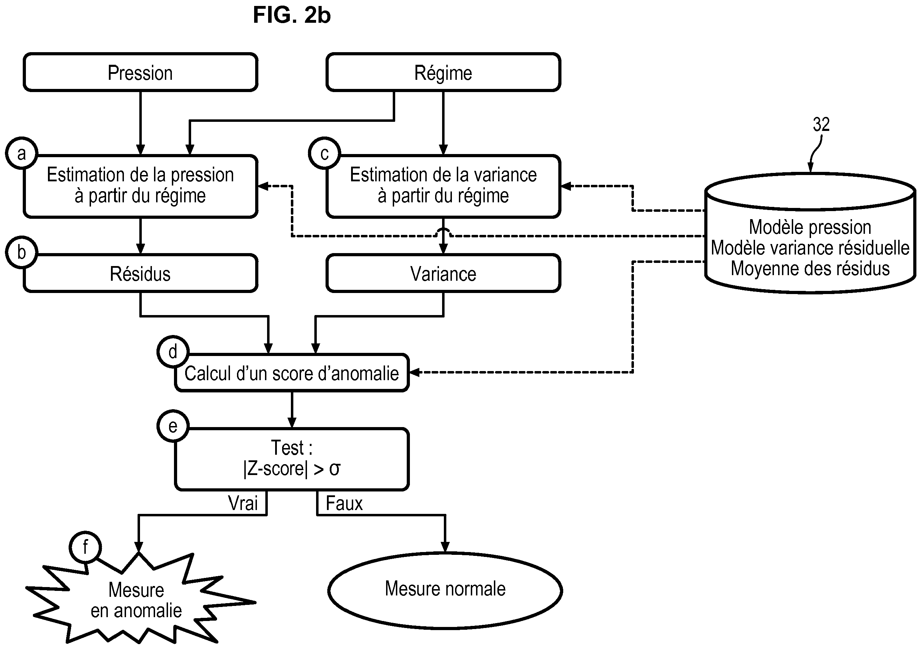

Cette phase est illustrée par la **figure 2b.** Si la phase d'apprentissage a été mise en oeuvre précédemment, les modèles peuvent être chargés depuis les moyens de stockage de données 32, comme illustré sur cette figure.

Dans une étape (a), une valeur estimée $y_{exec}$ du paramètre physique est calculée pour la valeur $x_{exec}$ du paramètre de fonctionnement en fonction du modèle de régression associé à ladite pluralité de couples $(x_i; y_i)_{i \in [\![1,n]\!]}$ (modèle déterminé le cas échéant dans la phase d'apprentissage). Ce calcul se fait comme expliqué précédemment par la formule $\hat{y}_{exec} = f(x_{exec})$.

Dans l'étape (b) suivante, le résidu $Res_{exec}$ associé est calculé : $res_{exec} = y_{exec} - \hat{y}_{exec}$.

Dans l'étape (c) (qui peut être réalisée avant l'une et/ou l'autre des étapes (a) et (b)), une valeur estimée $\widehat{var}_{exec}$ de la variance du paramètre physique est calculée pour la valeur $x_{exec}$ du paramètre de fonctionnement en fonction du modèle de variance associé à ladite pluralité de couples $(x_i; y_i)_{i \in [\![1,n]\!]}$ (modèle déterminé le cas échéant dans la phase d'apprentissage). Ce calcul se fait comme expliqué précédemment par la formule $\widehat{var}_{exec} = g(x_{exec})$.

Le résidu, la valeur estimée $\widehat{var}_{exec}$ de la variance, et la valeur moyenne de résidu *mean* (calculée le cas échéant lors de la phase d'apprentissage) pour ladite pluralité de couples $(x_i; y_i)_{i \in [\![1,n]\!]}$ permettent aux moyens de traitement de données de calculer dans une étape (d) un score d'anomalie (également appelé score de confiance) $Z_{score}$ de la valeur mesurée $y_{exec}$. De façon préférée, le score d'anomalie est donné par la formule

$$Z_{score} = \left| \frac{res_{exec} - mean}{\sqrt{\widehat{var}_{exec}}} \right|.$$ Plus ce score est élevé, plus la mesure est susceptible d'être anormale.

Dans une étape (e), le score d'anomalie $Z_{score}$ de la valeur mesurée $y_{exec}$ est comparé avec le seuil $\sigma$ évoqué précédemment (seuil exprimé en nombre d'écart type, par exemple trois à six écarts-type).

Si le score d'anomalie $Z_{score}$ est supérieur audit seuil $\sigma$, la mesure est signalée comme anormale sur l'interface 33 dans une étape (f). Une alarme peut être déclenchée s'il s'agit d'un test en temps réel sur un banc d'essai 2, et ce dernier arrêté (l'essai en cours n'est pas valide et l'anomalie doit être analysée avant que le banc de test puisse être réutilisé). Le couple $(x_{exec}; y_{exec})$ n'est alors pas ajouté à la base de données, (ou supprimé s'il était en attente de vérification).

Dans le cas contraire, la mesure est considérée comme normale, et le couple $(x_{exec}; y_{exec})$ rejoint les valeurs de référence de la base de données. La phase d'apprentissage peut éventuellement être relancée pour mettre à jour les modèles.

De façon préférée, un rapport de synthèse (par exemple destiné au bureau d'études) est alors automatiquement émis.

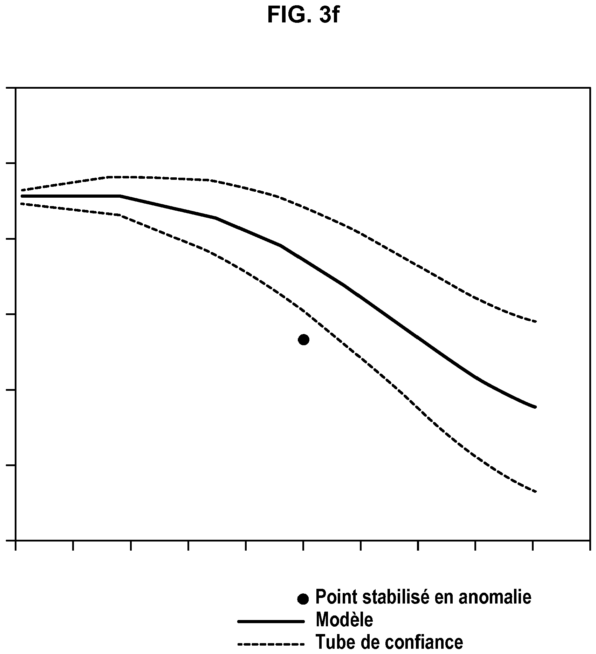

Il est à noter qu'une mesure anormale sera représentée en dehors du tube de confiance évoqué précédemment, comme par exemple le montre la **figure 3f**.

En particulier, si $Z_{score} > \sigma$, alors $|res_{exec} (= y_{exec} - \hat{y}_{exec}) - mean| > \sigma \times \widehat{var}_{exec}$ $(=$ le demi-diamètre du tube de confiance), ce qui signifie que le point associé est hors du tube de confiance.

En effet, les résidus suivent une loi Normale de moyenne *mean.* Le test (comparaison avec le $Z_{score}$) consiste à voir s'il est vraisemblable que l'observation courante soit issue de cette même loi.

Si on trace la distribution d'une loi normale, on voit bien qu'au-delà de six écarts-type, on se place en queue de la distribution. La probabilité d'observer quelque chose de normal au-delà de ce seuil d'écarts-type est de l'ordre de $10^{-9}$.

*Equipement et système*

L'équipement 3 (représenté sur la figure 1) pour la mise en oeuvre du procédé qui vient d'être décrit (estimation du caractère normal ou non d'une valeur $y_{exec}$ mesurée par un capteur 20 d'un paramètre physique d'un dispositif 1 tel qu'un moteur d'aéronef pour une valeur $x_{exec}$ d'un paramètre de fonctionnement dudit dispositif 1) comprend des moyens de traitement de données 31, des moyens de stockage de données 32, et de moyens d'interface 33.

Les moyens de stockage de données 32 stockent dans une base de données la pluralité de couples $(x_i; y_i)_{i \in [\![1,n]\!]}$ définissant chacun une valeur de référence $y_i$ du paramètre physique pour une valeur $x_i$ d'un paramètre de fonctionnement.

Les moyens de traitement de données 31 sont configurés pour mettre en oeuvre :

- Un module de calcul en fonction d'un modèle de régression associé à ladite pluralité de couples $(x_i; y_i)_{i \in [\![1,n]\!]}$ d'une valeur estimée $\hat{y}_{exec}$ du paramètre physique pour la valeur $x_{exec}$ du paramètre de fonctionnement ;
- Un module de calcul d'un résidu $res_{exec}$ associé ;
- Un module de calcul en fonction d'un modèle de variance associé à ladite pluralité de couples $(x_i; y_i)_{i \in [\![1,n]\!]}$ d'une valeur estimée $\widehat{var}_{exec}$ d'une variance du paramètre physique pour la valeur $x_{exec}$ du paramètre de fonctionnement ;
- Un module de calcul d'un score d'anomalie $Z_{score}$ de la valeur mesurée $y_{exec}$ en fonction du résidu $res_{exec}$, de la valeur estimée $\widehat{var}_{exec}$ de la variance, et d'une valeur moyenne de résidu pour ladite pluralité de couples $(x_i; y_i)_{i \in [\![1,n]\!]}$ ;
- Un module de comparaison du score d'anomalie

$Z_{score}$ de la valeur mesurée $y_{exec}$ avec un seuil $\sigma$ en nombre d'écart type ;

- Une module d'émission d'un signal d'alarme sur les moyens d'interface 33 signalant la mesure comme anormale si le score d'anomalie $Z_{score}$ est supérieur audit seuil $\sigma$.

Si l'équipement 3 met également en oeuvre la phase d'apprentissage, alors le module de traitement de données 31 est en outre configuré pour mettre en oeuvre :

- Un module de détermination dudit modèle de régression associé à ladite pluralité de couples $(x_i; y_i)_{i \in [\![1,n]\!]}$ par une régression modélisant $y$ en fonction de $x$ à partir de l'ensemble $\{x_i; y_i\}_{i \in [\![1,n]\!]}$ (ce module est le cas échéant configuré pour stocker le modèle de régression sur les moyens de stockage de données 32 pour utilisation future) ;
- Un module de calcul pour chacun des couples $(x_i; y_i)_{i \in [\![1,n]\!]}$ d'une valeur estimée $\hat{y}_i$ du paramètre physique et d'un résidu $res_i$ associés ;
- Un module de calcul de la moyenne desdits résidus $res_i$ ;
- Un module de calcul sur une fenêtre glissante de taille $w$ d'un ensemble de valeurs $(var_j)_{j \in [\![1,n\text{-}w]\!]}$ de variance résiduelle ;
- Un module de détermination dudit modèle de variance associé à ladite pluralité de couples $(x_i; y_i)_{i \in [\![1,n]\!]}$ par une régression modélisant $var$ en fonction de $x$ à partir de l'ensemble $\{x_j; var_j\}_{j \in [\![1,n\text{-}w]\!]}$ (ce module est le cas échéant configuré pour stocker le modèle de variance sur les moyens de stockage de données 32 pour utilisation future).

L'équipement 3 s'inscrit comme expliqué de façon préférée dans un système comprenant en outre un banc d'essai 2 comprenant le capteur 20 mesurant la valeur $y_{exec}$ du paramètre physique et adapté pour recevoir le dispositif 1.

*Produit programme d'ordinateur*

Selon un quatrième et un cinquième aspects, l'invention concerne un produit programme d'ordinateur comprenant des instructions de code pour l'exécution (sur des moyens de traitement de donnés 31, en particulier ceux de l'équipement 3) d'un procédé selon le premier aspect de l'invention d'estimation du caractère normal ou non d'une valeur $y_{exec}$ mesurée par un capteur 20 d'un paramètre physique d'un dispositif 1 pour une valeur $x_{exec}$ d'un paramètre de fonctionnement dudit dispositif 1, ainsi que des moyens de stockage lisibles par un équipement informatique (par exemple les moyens de stockage de données 32 de cet équipement 3) sur lequel on trouve ce produit programme d'ordinateur.

**Revendications**

1. Procédé d'estimation du caractère normal ou non d'une valeur $(y_{exec})$ mesurée par un capteur (20) d'un paramètre physique d'un dispositif (1) pour une valeur $(x_{exec})$ d'un paramètre de fonctionnement dudit dispositif (1), une pluralité de couples $(x_i; y_i)_{i \in [\![1,n]\!]}$ définissant chacun une valeur de référence $(y_i)$ du paramètre physique pour une valeur $(x_i)$ du paramètre de fonctionnement étant stockés dans une base de données stockée sur des moyens de stockage de données (32), le procédé étant **caractérisé en ce qu'**il comprend la mise en oeuvre par des moyens de traitement de données (31) d'étapes de :

   (a) Calcul en fonction d'un modèle de régression associé à ladite pluralité de couples $(x_i; y_i)_{i \in [\![1,n]\!]}$ d'une valeur estimée $(\hat{y}_{exec})$ du paramètre physique pour la valeur $(x_{exec})$ du paramètre de fonctionnement ;
   (b) Calcul d'un résidu $(res_{exec})$ associé ;
   (c) Calcul en fonction d'un modèle de variance associé à ladite pluralité de couples $(x_i; y_i)_{i \in [\![1,n]\!]}$ d'une valeur estimée $(\widehat{var}_{exec})$ d'une variance du paramètre physique pour la valeur $(x_{exec})$ du paramètre de fonctionnement ;
   (d) Calcul d'un score d'anomalie $(Z_{score})$ de la valeur mesurée $(y_{exec})$ en fonction du résidu $(res_{exec})$, de la valeur estimée $(\widehat{var}_{exec})$ de la variance, et d'une valeur moyenne $(mean)$ de résidu pour ladite pluralité de couples $(x_i; y_i)_{i \in [\![1,n]\!]}$ ;
   (e) Comparaison du score d'anomalie $(Z_{score})$ de la valeur mesurée $(y_{exec})$ avec un seuil $(\sigma)$ en nombre d'écart type ;
   (f) si le score d'anomalie $(Z_{score})$ est supérieur audit seuil $(\sigma)$, signalement de la mesure comme anormale sur des moyens d'interface (33).

2. Procédé selon la revendication 1, comprenant une phase préalable de traitement de ladite pluralité de couples $(x_i; y_i)_{i \in [\![1,n]\!]}$ de la base de données, comprenant la mise en oeuvre par des moyens de traitement de données (31) d'étapes de :

   (a0) détermination dudit modèle de régression associé à ladite pluralité de couples $(x_i; y_i)_{i \in [\![1,n]\!]}$ par une régression modélisant la valeur $y$ du paramètre physique en fonction de la valeur $x$ du paramètre de fonctionnement à partir de l'ensemble $\{x_i; y_i\}_{i\in[\![1,n]\!]}$, où $x_i; y_i$ désigne les valeurs d'un couple stocké dans la base de données ;

(a1) pour chacun des couples $(x_i; y_i)_{i\in[\![1,n]\!]}$, calcul d'une valeur estimée $(\hat{y}_i)$ du paramètre physique et d'un résidu $(res_i)$ associé ;
(a2) calcul de la moyenne $(mean)$ desdits résidus $(res_i)$ ;
(a3) calcul sur une fenêtre glissante de taille w d'un ensemble de valeurs $(var_j)_{j\in[\![1,n-w+1]\!]}$ de variance résiduelle chacune associée à une valeur $(x_j)$ du paramètre de fonctionnement d'un couple $(x_j; y_j)_{j\in[\![1,n-w+1]\!]}$ ;
(a4) détermination dudit modèle de variance associé à ladite pluralité de couples $(x_i; y_i)_{i\in[\![1,n]\!]}$ par une régression modélisant la valeur $var$ de la variance résiduelle en fonction de la valeur $x$ du paramètre de fonctionnement à partir de l'ensemble $\{x_j; var_j\}_{j\in[\![1,n-w+1]\!]}$, où $var_j$ désigne une valeur de variance résiduelle calculée et $x_j$ la valeur du paramètre de fonctionnement associée.

3. Procédé selon la revendication 2, dans laquelle la phase préalable comprend une étape (a5) de détermination en fonction dudit modèle de variance déterminé d'une zone de confiance autour dudit modèle de régression déterminé, et d'affichage sur les moyens d'interface (33) de ladite zone de confiance.

4. Procédé selon la revendication 3, dans laquelle la zone de confiance est définie par une enveloppe supérieure de formule $f(x) + \sigma \times \sqrt{g(x)}$, et une enveloppe inférieure de formule $f(x) - \sigma \times \sqrt{g(x)}$, où $f$ représente le modèle de régression et $g$ représente le modèle de variance.

5. Procédé selon l'une des revendications 1 à 4, dans laquelle le score d'anomalie $(Z_{score})$ est obtenu par la formule $Z_{score} = \left| \dfrac{res_{exec}-mean}{\sqrt{\widehat{var}_{exec}}} \right|$, où $res_{exec}$ est le résidu associé à la valeur mesurée du paramètre physique, $\widehat{var}_{exec}$ la valeur estimée de la variance, et $mean$ est la valeur moyenne de résidu pour ladite pluralité de couples $(x_i; y_i)_{i\in[\![1,n]\!]}$

6. Procédé selon l'une des revendications 1 à 5, dans laquelle ledit dispositif (1) est un moteur d'aéronef.

7. Procédé selon la revendication 6, dans laquelle ledit paramètre physique est choisi parmi une pression, une température interne, une vitesse d'écoulement d'un fluide, un niveau de bruit, et une densité de carburant, associés au moteur (1).

8. Procédé selon l'une des revendications 6 et 7, dans laquelle ledit paramètre de fonctionnement est choisi parmi un régime, un débit de carburant, une température de carburant, une pression ambiante, et une température ambiante, associés au moteur (1).

9. Procédé selon l'une des revendications 6 à 8, dans lequel le moteur (1) est disposé dans un banc d'essai (2) comprenant le capteur (20), l'étape (e) comprenant l'arrêt du banc d'essai (2) si la mesure est signalée comme anormale.

10. Procédé selon l'une des revendications 1 à 8, dans lequel l'étape (e) comprend l'ajout du couple $(x_{exec}; y_{exec})$ formé de la valeur mesurée du paramètre physique et de la valeur du paramètre de fonctionnement associée à ladite base de données de couples $(x_i; y_i)_{i\in[\![1,n]\!]}$ si la mesure n'est pas signalée comme anormale.

11. Equipement (3) d'estimation du caractère normal ou non d'une valeur $(y_{exec})$ mesurée par un capteur (20) d'un paramètre physique d'un dispositif (1) pour une valeur $(x_{exec})$ d'un paramètre de fonctionnement dudit dispositif (1), comprenant des moyens de traitement de données (31), des moyens de stockage de données (32) stockant dans une base de données une pluralité de couples $(x_i; y_i)_{i\in[\![1,n]\!]}$ définissant chacun une valeur de référence $y_i$ du paramètre physique pour une valeur $x_i$ d'un paramètre de fonctionnement, et des moyens d'interface (33), l'équipement (3) étant **caractérisé en ce que** les moyens de traitement de données (31) sont configurés pour mettre en oeuvre :

- Un module de calcul en fonction d'un modèle de régression associé à ladite pluralité de couples $(x_i; y_i)_{i\in[\![1,n]\!]}$ d'une valeur estimée $\hat{y}_{exec}$ du paramètre physique pour la valeur $x_{exec}$ du paramètre de fonctionnement ;
- Un module de calcul d'un résidu $(res_{exec})$ associé ;
- Un module de calcul en fonction d'un modèle de variance associé à ladite pluralité de couples $(x_i; y_i)_{i\in[\![1,n]\!]}$ d'une valeur estimée $(\widehat{var}_{exec})$ d'une variance du paramètre physique pour la valeur $(x_{exec})$ du paramètre de fonctionnement ;

- Un module de calcul d'un score d'anomalie $(Z_{score})$ de la valeur mesuré $(y_{exec})$ en fonction du résidu ($res_{exec}$), de la valeur estimée ($\widehat{var}_{exec}$) de la variance, et d'une valeur moyenne (*mean*) de résidu pour ladite pluralité de couples $(x_i; y_i)_{i\in\llbracket 1,n\rrbracket}$ ;
- Un module de comparaison du score d'anomalie ($Z_{score}$) de la valeur mesurée ($y_{exec}$) avec un seuil ($\sigma$) en nombre d'écart type ;
- Une module d'émission d'un signal d'alarme sur les moyens d'interface (33) signalant la mesure comme anormale si le score d'anomalie ($Z_{score}$) est supérieur audit seuil ($\sigma$).

**12.** Equipement selon la revendication 11 dans lequel le module de traitement de données (31) est en outre configuré pour mettre en oeuvre :

- Un module de détermination dudit modèle de régression associé à ladite pluralité de couples $(x_i; y_i)_{i\in\llbracket 1,n\rrbracket}$ par une régression modélisant la valeur *y* du paramètre physique en fonction de la valeur *x* du paramètre de fonctionnement à partir de l'ensemble $(x_i; y_i)_{i\in\llbracket 1,n\rrbracket}$, où $x_i; y_i$ désigne les valeurs d'un couple stocké dans la base de données ;

- Un module de calcul pour chacun des couples $(x_i; y_i)_{i\in\llbracket 1,n\rrbracket}$ d'une valeur estimée ($\hat{y}_i$) du paramètre physique et d'un résidu ($res_i$) associés ;
- Un module de calcul de la moyenne *(mean)* desdits résidus ($res_i$) ;
- Un module de calcul sur une fenêtre glissante de taille w d'un ensemble de valeurs $(var_j)_{j\in\llbracket 1,n\text{-}w+1\rrbracket}$ de variance résiduelle, chacune associée à une valeur ($x_j$) du paramètre de fonctionnement d'un couple $(x_j; y_j)_{j\in\llbracket 1,n\text{-}w+1\rrbracket}$;
- Un module de détermination dudit modèle de variance associé à ladite pluralité de couples $(x_i; y_i)_{i\in\llbracket 1,n\rrbracket}$ par une régression modélisant *var* en fonction de *x* à partir de l'ensemble $\{x_j; var_j\}_{j\in\llbracket 1,n\text{-}w+1\rrbracket}$, où $var_j$ désigne une valeur de variance résiduelle calculée et $x_j$ la valeur du paramètre de fonctionnement associée.

**13.** Système comprenant :

- un banc d'essai (2) comprenant un capteur (20) et adapté pour recevoir un dispositif (1) ;
- un équipement (3) selon l'une des revendications 11 et 12 d'estimation du caractère normal ou non d'une valeur ($y_{exec}$) mesurée par le capteur (20) d'un paramètre physique dudit dispositif (1) pour une valeur ($x_{exec}$) d'un paramètre de fonctionnement dudit dispositif (1).

**14.** Produit programme d'ordinateur comprenant des instructions de code pour l'exécution d'un procédé selon l'une des revendications 1 à 10 d'estimation du caractère normal ou non d'une valeur $y_{exec}$ mesurée par un capteur (20) d'un paramètre physique d'un dispositif (1) pour une valeur $x_{exec}$ d'un paramètre de fonctionnement dudit dispositif (1).

**15.** Moyen de stockage lisible par un équipement informatique sur lequel un produit programme d'ordinateur comprend des instructions de code pour l'exécution d'un procédé selon l'une des revendications 1 à 10 d'estimation du caractère normal ou non d'une valeur $y_{exec}$ mesurée par un capteur (20) d'un paramètre physique d'un dispositif (1) pour une valeur $x_{exec}$ d'un paramètre de fonctionnement dudit dispositif (1).

**Patentansprüche**

**1.** Schätzungsverfahren der vorhandenen oder nicht vorhandenen Normalität eines von einem Sensor (20) gemessenen Wertes ($y_{exec}$) eines physikalischen Parameters einer Vorrichtung (1) für einen Wert ($x_{exec}$) eines Betriebsparameters der genannten Vorrichtung (1), wobei eine Vielzahl von Paaren $(x_i; y_i)_{i\in\llbracket 1,n\rrbracket}$ jeweils einen Referenzwert ($y_i$) des physikalischen Parameters für einen Wert ($x_i$) des Betriebsparameters definiert, die in einer Datenbank gespeichert sind, welche auf den Datenspeichermitteln (32) gespeichert ist, wobei das Verfahren **dadurch gekennzeichnet ist, dass** es die Umsetzung der Schritte durch Datenverarbeitungsmittel (31) umfasst:

(a) Berechnung eines geschätzten Wertes ($\hat{y}_{exec}$) des physikalischen Parameters für den Wert ($x_{exec}$) des Betriebsparameters in Abhängigkeit eines Regressionsmodells, das der genannten Vielzahl von Paaren $(x_i; y_i)_{i\in\llbracket 1,n\rrbracket}$ zugeordnet ist;
(b) Berechnung eines zugeordneten Restes ($res_{exec}$);

(c) Berechnung eines geschätzten Wertes ($\widehat{var}_{exec}$) einer Varianz des physikalischen Parameters für den Wert ($x_{exec}$) des Betriebsparameters in Abhängigkeit eines Varianzmodells, das der genannten Vielzahl von Paaren $(x_i; y_i)_{i\in\llbracket 1,n\rrbracket}$ zugeordnet ist;
(d) Berechnung einer Anomalie-Punktzahl ($Z_{score}$) des gemessenen Wertes ($y_{exec}$) in Abhängigkeit des Restes ($res_{exec}$) des

geschätzten Wertes ($\widehat{var}_{exec}$) der Varianz und eines durchschnittlichen Wertes *(mean)* des Restes für die genannte Vielzahl von Paaren $(x_i;y_i)_{i\in\llbracket 1,n\rrbracket}$;

(e) Vergleich der Anomalie-Punktzahl ($Z_{score}$) des gemessenen Wertes ($y_{exec}$) mit einem Schwellenwert ($\sigma$) einer zahlenmäßigen typischen Abweichung;

(f) Wenn die Anomalie-Punktzahl ($Z_{score}$) den genannten Schwellenwert ($\sigma$) übersteigt, Meldung der Messung als anormal auf Schnittstellenmitteln (33).

2. Verfahren gemäß Anspruch 1, umfassend eine vorherige Verarbeitungsphase der genannten Vielzahl von Paaren $(x_i;y_i)_{i\in\llbracket 1,n\rrbracket}$ der Datenbank, umfassend die Umsetzung von Schritten durch Datenverarbeitungsmittel (31):

(a0) Bestimmung des genannten, der genannten Vielzahl von Paaren $(x_i;y_i)_{i\in\llbracket 1,n\rrbracket}$ zugeordneten Regressionsmodells durch eine Regression, die den Wert *y* des physikalischen Parameters in Abhängigkeit des Wertes *x* des Betriebsparameters ausgehend von der Gruppe $\{x_i;y_i\}_{i\in\llbracket 1,n\rrbracket}$ als Modell gestaltet, in dem $x_i;y_i$ die Werte eines in der Datenbank gespeicherten Paares bezeichnet;

(a1) für jedes der Paare $(x_i;y_i)_{i\in\llbracket 1,n\rrbracket}$ Berechnung eines geschätzten Wertes ($\hat{y}_i$) des physikalischen Parameters und eines zugeordneten Restes ($res_i$);

(a2) Berechnung des Durchschnittes *(mean)* der genannten Reste ($res_i$) ;

(a3) Berechnung einer Wertegruppe $(var_j)_{j\in\llbracket 1,n\text{-}w+1\rrbracket}$ der Restvarianz mit einer Größe *w*, die jeweils einem Wert ($x_j$) des Betriebsparameters eines Paares $(x_j;y_j)_{j\in\llbracket 1,n\text{-}w+1\rrbracket}$ zugeordnet ist;

(a4) Bestimmung des genannten Varianzmodells, das der genannten Vielzahl von Paaren $(x_i;y_i)_{i\in\llbracket 1,n\rrbracket}$ durch eine Regression zugeordnet ist, die den Wert *var* der Restvarianz in Abhängigkeit des Wertes *x* des Betriebsparameters ausgehend von der Gruppe $\{x_j;var_j\}_{j\in\llbracket 1,n\text{-}w+1\rrbracket}$, als Modell gestaltet, bei dem $var_j$ einen berechneten Varianzrestwert und $x_j$ den Wert des zugeordneten Betriebsparameters bezeichnet.

3. Verfahren gemäß Anspruch 2, bei dem die vorherige Phase einen Schritt (a5) zur Bestimmung eines Vertrauensbereichs um das genannte bestimmte Regressionsmodell und zur Anzeige des genannten Vertrauensbereichs auf den Schnittstellenmitteln (33) des genannten Vertrauensbereichs in Abhängigkeit von dem genannten bestimmten Varianzmodell umfasst.

4. Verfahren gemäß Anspruch 3, bei dem der Vertrauensbereich durch eine obere Hülle mit der Formel

$$f(x) + \sigma \times \sqrt{g(x)}$$

und eine untere Hülle mit der Formel $f(x) - \sigma \times \sqrt{g(x)}$ definiert ist, wobei *f* das Regressionsmodell darstellt und *g* das Varianzmodell darstellt.

5. Verfahren gemäß einem der Ansprüche 1 bis 4, bei dem die Anomalie-Punktzahl ($Z_{score}$) durch die Formel

$$Z_{score} = \left| \frac{res_{exec} - mean}{\sqrt{\widehat{var}_{exec}}} \right|,$$

erhalten wird, in der $res_{exec}$ der Rest ist, der dem gemessenen Wert des physikalischen Parameters zugeordnet ist, $\widehat{var}_{exec}$ der geschätzte Wert der Varianz ist und *mean* der durchschnittliche Wert des Restes für die genannte Vielzahl von Paaren $(x_i;y_i)_{i\in\llbracket 1,n\rrbracket}$ ist.

6. Verfahren gemäß einem der Ansprüche 1 bis 5, bei dem die genannte Vorrichtung (1) ein Luftfahrzeugmotor ist.

7. Verfahren gemäß Anspruch 6, bei dem der genannte physikalische Parameter aus einem Druck, einer internen Temperatur, einer Ablaufgeschwindigkeit eines Mediums, einem Geräuschpegel und einer Treibstoffdichte ausgewählt ist, die dem Motor (1) zugeordnet sind.

8. Verfahren gemäß einem der Ansprüche 6 und 7, bei dem der genannte Betriebsparameter aus einer Betriebsart, einem Treibstoffdurchsatz, einer Treibstofftemperatur, einem Umgebungsdruck und einer Raumtemperatur ausgewählt ist, die dem Motor (1) zugeordnet sind.

9. Verfahren gemäß irgendeinem der Ansprüche 6 bis 8, bei dem der Motor (1) in einem Prüfstand (2) angeordnet ist, der den Sensor (20) umfasst, wobei der Schritt (e) die Abschaltung des Prüfstandes (2) umfasst, wenn die Messung als anormal gemeldet ist.

10. Verfahren gemäß einem der Ansprüche 1 bis 8, bei dem der Schritt (e) den Zusatz des Paares ($x_{exec}$ ; $y_{exec}$) umfasst, das aus dem gemessenen Wert des physikalischen Parameters und dem Wert des Betriebsparameters gebildet ist, der der genannten Da-

tenbank der Paare $(x_i;y_i)_{i\in[\![1,n]\!]}$ zugeordnet ist, wenn die Messung nicht als anormal gemeldet ist.

11. Schätzungsausrüstung (3) der vorhandenen oder nicht vorhandenen Normalität eines von einem Sensor (20) gemessenen Wertes $(y_{exec})$ eines physikalischen Parameters einer Vorrichtung (1) für einen Wert $(x_{exec})$ eines Betriebsparameters der genannten Vorrichtung (1), umfassend Datenverarbeitungsmittel (31), Datenspeichermittel (32), die in einer Datenbank eine Vielzahl von Paaren $(x_i;y_i)_{i\in[\![1,n]\!]}$ speichern, die jeweils einen Referenzwert $y_i$ des physikalischen Parameters für einen Wert $x_i$ eines Betriebsparameters definieren, und Schnittstellenmittel (33), wobei die Ausrüstung (3) **dadurch gekennzeichnet ist, dass** die Datenverarbeitungsmittel (31) konfiguriert sind, um umzusetzen:

- Ein Berechnungsmittel eines geschätzten Wertes $\hat{y}_{exec}$ des physikalischen Parameters für den Wert $x_{exec}$ des Betriebsparameters in Abhängigkeit eines Regressionsmodells, das der genannten Vielzahl von Paaren $(x_i;y_i)_{i\in[\![1,n]\!]}$ zugeordnet ist;
- Ein Berechnungsmodul eines zugeordneten Restes $(res_{exec})$ ;

- Ein Berechnungsmodul eines geschätzten Wertes $(\widehat{var}_{exec})$ einer Varianz des physikalischen Parameters für den Wert $(x_{exec})$ des Betriebsparameters in Abhängigkeit eines Varianzmodells, das der genannten Vielzahl von Paaren $(x_i;y_i)_{i\in[\![1,n]\!]}$ zugeordnet ist;
- Ein Berechnungsmodul einer Anomalie-Punktzahl $(Z_{score})$ des in Abhängigkeit des Restes $(res_{exec})$ gemessenen Wertes $(y_{exec})$, des geschätzten Wertes $(\widehat{var}_{exec})$ der Varianz und eines durchschnittlichen Wertes *(mean)* des Restes für die genannte Vielzahl von Paaren $(x_i;y_i)_{i\in[\![1,n]\!]}$ ;
- Ein Vergleichsmodul der Anomalie-Punktzahl $(Z_{score})$ des gemessenen Wertes $(y_{exec})$ mit einem Schwellenwert $(\sigma)$ einer zahlenmäßigen typischen Abweichung;
- Ein Ausgabemodul eines Alarmsignals auf den Schnittstellenmitteln (33), das die Messung als anormal meldet, wenn die Anomalie-Punktzahl $(Z_{score})$ höher ist als der genannte Schwellenwert $(\sigma)$.

12. Ausrüstung gemäß Anspruch 11, bei der das Datenverarbeitungsmodul (31) darüber hinaus konfiguriert ist, um umzusetzen:

- Ein Bestimmungsmodul des genannten Regressionsmodells, das der genannten Vielzahl von Paaren $(x_i;y_i)_{i\in[\![1,n]\!]}$ durch eine Regression zugeordnet ist, die den Wert $y$ des physikalischen Parameters in Abhängigkeit des Wertes $x$ des Betriebsparameters ausgehend von der Gruppe $\{x_i;y_i\}_{i\in[\![1,n]\!]}$ als Modell gestaltet, bei dem $x_i;y_i$ die Werte eines Paares bezeichnet, das in der Datenbank gespeichert ist;

- Ein Berechnungsmodul für jedes der Paare $(x_i;y_i)_{i\in[\![1,n]\!]}$ eines geschätzten Wertes $(\hat{y}_i)$ des physikalischen Parameters und eines Restes $(res_i)$, die zugeordnet sind;
- Ein Berechnungsmodul des Durchschnitts *(mean)* der genannten Reste $(res_i)$ ;
- Ein Berechnungsmodul auf einem gleitenden Fenster der Größe $w$ einer Gruppe von Werten $(var_j)_{j\in[\![1,n-w+1]\!]}$ der Restvarianz, wobei jeder einem Wert $(x_j)$ des Betriebsparameters eines Paares $(x_j;y_j)_{j\in[\![1,n-w+1]\!]}$ zugeordnet ist;
- Ein Bestimmungsmodul des genannten Varianzmodells, das der genannten Vielzahl von Paaren $(x_i;y_i)_{i\in[\![1,n]\!]}$ durch eine Regression zugeordnet ist, die $var$ in Abhängigkeit von $x$ ausgehend von der Gruppe $\{x_j;var_j\}_{j\in[\![1,n-w+1]\!]}$, als Modell gestaltet, bei dem $var_j$ einen berechneten Restvarianzwert und $x_j$ den Wert des zugeordneten Betriebsparameters bezeichnet.

13. System umfassend:

- einen Prüfstand (2), umfassend einen Sensor (20) und der geeignet ist, um eine Vorrichtung (1) aufzunehmen;
- eine Ausrüstung (3) gemäß einem der Ansprüche 11 und 12 zur Schätzung der vorhandenen oder nicht vorhandenen Normalität eines Wertes $(y_{exec})$, der von dem Sensor (20) eines physikalischen Parameters der genannten Vorrichtung (1) für einen Wert $(x_{exec})$ eines Betriebsparameters der genannten Vorrichtung (1) gemessen ist.

14. Computerprogrammprodukt, umfassend CodeAnweisungen für die Ausführung eines Verfahrens gemäß einem der Ansprüche 1 bis 10 zur Schätzung der vorhandenen oder nicht vorhandenen Normalität eines von einem Sensor (20) gemessenen Wertes $y_{exec}$ eines physikalischen Parameters einer Vorrichtung (1) für einen Wert $x_{exec}$ eines Betriebsparameters der genannten Vorrichtung.

15. Speichermittel, das von einer Informatikausrüstung lesbar ist, auf dem ein Computerprogrammprodukt Codeanweisungen für die Ausführung eines Verfahrens gemäß einem der Ansprüche 1 bis 10 zur Schätzung der vorhandenen oder nicht vorhandenen Normalität eines von einem Sensor (20) gemessenen Wertes $y_{exec}$ eines physikalischen Parameters einer Vorrichtung (1) für einen Wert $x_{exec}$ eines Betriebsparameters der genannten Vorrichtung (1) umfasst.

**Claims**

1. A method for estimating whether a value ($y_{exec}$) measured by a sensor (20) of a physical parameter of a device (1) is normal for a value ($x_{exec}$) of an operation parameter of said device (1), a plurality of pairs $(x_i;y_i)_{i\in[\![1,n]\!]}$ each defining a reference value ($y_i$) of the physical parameter for a value ($x_i$) of the operation parameter being stored in a database stored on data storage means (32), the method being **characterised in that** it comprises implementing by data processing means (31) the steps of:

   (a) calculating on the basis of a regression model related to said plurality of pairs $(x_i;y_i)_{i\in[\![1,n]\!]}$ an estimated value ($\hat{y}_{exec}$) of the physical parameter for the value ($x_{exec}$) of the operation parameter;
   (b) calculating a related residual ($res_{exec}$);
   (c) calculating on the basis of a variance model related to said plurality of pairs $(x_i;y_i)_{i\in[\![1,n]\!]}$ an estimated value ($\widehat{var}_{exec}$) of a variance of the physical parameter for the value ($x_{exec}$) of the operation parameter;
   (d) calculating an anomaly score ($Z_{score}$) of the measured value ($y_{exec}$) on the basis of the residual ($res_{exec}$), the estimated value ($\widehat{var}_{exec}$) of the variance, and a mean residual value (*mean*) for said plurality of pairs $((x_i;y_i)_{i\in[\![1,n]\!]})$;
   (e) comparing the anomaly score ($Z_{score}$) of the measured value ($y_{exec}$) with a standard deviation threshold ($\sigma$);
   (f) if the anomaly score ($Z_{score}$) is higher than said threshold ($\sigma$), signalling the measurement as abnormal on interface means (33).

2. The method according to claim 1, comprising a prior phase of processing said plurality of pairs $(x_i;y_i)_{i\in[\![1,n]\!]}$ of the database, comprising implementing by data processing means (31) the steps of:

   (a0) determining said regression model related to said plurality of pairs $(x_i;y_i)_{i\in[\![1,n]\!]}$ by a regression modelling the value *y* of the physical parameter on the basis of the value *x* of the operation parameter from the set $(x_i;y_i)_{i\in[\![1,n]\!]}$ where $x_i;y_i$ designates the values of a pair stored in the database;

   (a1) for each of the pairs $(x_i;y_i)_{i\in[\![1,n]\!]}$, calculating an estimated value ($\hat{y}_i$) of the physical parameter and a related residual ($res_i$) ;
   (a2) calculating the mean (*mean*) of said residuals ($res_i$) ;
   (a3) calculating on a *w*-sized sliding window a set of values $(var_j)_{j\in[\![1,n-w+1]\!]}$ of residual variance each related to a value ($x_j$) of the operation parameter of a pair $(x_i;y_i)_{i\in[\![1,n-w+1]\!]}$
   (a4) determining said variance model related to said plurality of pairs $(x_i;y_i)_{i\in[\![1,n]\!]}$ by a regression modelling the value *var* of the residual variance on the basis of the value *x* of the operation parameter from the set $\{x_j;var_j\}_{j\in[\![1,n-w+1]\!]}$, where $var_j$ designates a calculated residual variance value and $x_j$ the value of the related operation parameter.

3. The method according to claim 2, wherein the prior phase comprises a step (a5) of determining on the basis of said determined variance model a confidence region about said determined regression model, and displaying on the interface means (33) said confidence region.

4. The method according to claim 3, wherein the confidence region is defined by an upper bound of the formula $f(x) + \sigma \times \sqrt{g(x)}$, and a lower bound of the formula $f(x) - \sigma \times \sqrt{g(x)}$, where *f* represents the regression model and *g* represents the variance model.

5. The method according to one of claims 1 to 4, wherein the anomaly score ($Z_{score}$) is obtained by the formula $Z_{score} = \left| \dfrac{res_{exec} - mean}{\sqrt{\widehat{var}_{exec}}} \right|$, where $res_{exec}$ is the residual related to the measured value of the physical parameter, $\widehat{var}_{exec}$ the estimated value of the variance, and *mean* is the mean residual value for said plurality of pairs $(x_i;y_i)_{i\in[\![1,n]\!]}$.

6. The method according to one of claims 1 to 5, wherein said device (1) is an aircraft engine.

7. The method according to claim 6, wherein said physical parameter is chosen from a pressure, an inner temperature, a fluid flow rate, a noise level and a fuel density, related to the engine (1).

8. The method according to one of claims 6 and 7, wherein said operation parameter is chosen from a speed, a fuel flow rate, a fuel temperature, an ambient pressure and an ambient temperature, related to the engine (1).

9. The method according to one of claims 6 to 8, wherein the engine (1) is disposed in a test bench (2) comprising the sensor (20), the step (e) comprising shutting down the test bench (2) if the measurement is signalled as abnormal.

10. The method according to one of claims 1 to 8, wherein the step (e) comprises adding the pair $(x_{exec}; y_{exec})$ formed by the measured value of the physical parameter and by the value of the operation parameter related to said database of pairs $(x_i; y_i)_{i \in [\![1,n]\!]}$ if the measurement is not signalled as abnormal.

11. An equipment (3) for estimating whether a value $(y_{exec})$ measured by a sensor (20) of a physical parameter of a device (1) is normal for a value $(x_{exec})$ of an operation parameter of said device (1), comprising data processing means (31), data storage means (32) storing in a database a plurality of pairs $(x_i; y_i)_{i \in [\![1,n]\!]}$ each defining a reference value $y_i$ of the physical parameter for a value $x_i$ of an operation parameter, and interface means (33), the equipment (3) being **characterised in that** the data processing means (31) are configured to implement:

- a module for calculating on the basis of a regression model related to said plurality of pairs $(x_i; y_i)_{i \in [\![1,n]\!]}$ an estimated value $\hat{y}_{exec}$ of the physical parameter for the value $x_{exec}$ of the operation parameter;
- a module for calculating a related residual $(res_{exec})$;
- a module for calculating on the basis of a variance model related to said plurality of pairs $(x_i; y_i)_{i \in [\![1,n]\!]}$ an estimated value $(\widehat{var}_{exec})$ of a variance of the physical parameter for the value $(x_{exec})$ of the operation parameter;
- a module for calculating an anomaly score $(Z_{score})$ of the measured value $(y_{exec})$ on the basis of the residual $(res_{exec})$, the estimated variance value $(\widehat{var}_{exec})$, and a mean residual value *(mean)* for said plurality of pairs $(x_i; y_i)_{i \in [\![1,n]\!]}$;

- a module for comparing the anomaly score $(Z_{score})$ of the measured value $(y_{exec})$ with a standard deviation threshold $(\sigma)$;
- a module for transmitting an alarm signal on the interface means (33) signalling the measurement as abnormal if the anomaly score $(Z_{score})$ is higher than said threshold $(\sigma)$.

12. The equipment according to claim 11, wherein the data processing module (31) is further configured to implement:

- a module for determining said regression model related to said plurality of pairs $(x_i; y_i)_{i \in [\![1,n]\!]}$ by a regression modelling the value $y$ of the physical parameter on the basis of the value $x$ of the operation parameter from the set $\{x_i; y_i\}_{i \in [\![1,n]\!]}$, where $x_i; y_i$ designates the values of a pair stored in the database;

- a module for calculating for each of the pairs $(x_i; y_i)_{i \in [\![1,n]\!]}$ an estimated value $(\hat{y}_i)$ of the physical parameter and a residual $(res_i)$ being related to each other;
- a module for calculating the mean *(mean)* of said residuals $(res_i)$ ;
- a module for calculating on a $w$-sized sliding window a set of values $(var_j)_{j \in [\![1,n\text{-}w+1]\!]}$ of residual variance, each related to a value $(x_j)$ of the operation parameter of a pair $(x_i; y_i)_{i \in [\![1,n\text{-}w+1]\!]}$;
- a module for determining said variance model related to said plurality of pairs $(x_i; y_i)_{i \in [\![1,n]\!]}$ by a regression modelling $var$ on the basis of $x$ from the set $\{x_j; var_j\}_{j \in [\![1,n\text{-}w+1]\!]}$, where $var_j$ designates a calculated residual variance value and $x_j$ the value of the related operation parameter.

13. A system comprising:

- a test bench (2) comprising a sensor (20) and adapted to receive a device (1);
- an equipment (3) according to one of claims 11 and 12 for estimating whether a value $(y_{exec})$ measured by the sensor (20) of a physical parameter of said device (1) is normal or not for a value $(x_{exec})$ of an operation parameter of said device (1).

14. A computer program product comprising code instructions for carrying out a method according to one of claims 1 to 10 for estimating whether a value $y_{exec}$ measured by a sensor (20) of a physical parameter of a device (1) is normal or not for a value $x_{exec}$ of an operation parameter of said device (1).

**15.** A storage means readable by a computing equipment on which a computer program product comprises code instructions for carrying out a method according to one of claims 1 to 10 for estimating whether a value $y_{exec}$ measured by a sensor (20) of a physical parameter of a device (1) is normal or not for a value $x_{exec}$ of an operation parameter of said device (1).

# FIG. 1

**FIG. 2a**

Pression

Régime

(a0)
(a1) Modélisation de la pression
en fonction du régime
+
Calcul moyenne des résidus

(a2) Résidus

(a3)
(a4) Modélisation de la
variance résiduelle
en fonction du régime

32

Modèle pression
Modèle variance résiduelle
Moyenne des résidus

FIG. 2b

## FIG. 3a

● Points stabilisés
—— Modèle

## FIG. 3b

Résidus

## FIG. 3c

● Points stabilisés
—— Modèle

## FIG. 3d

● Points stabilisés
───── Modèle
--------- Tube de confiance

## FIG. 3e

● Points stabilisés
—— Modèle
-------- Tube de confiance

## FIG. 3f

● Point stabilisé en anomalie
—— Modèle
- - - - - - - - Tube de confiance

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2965915
- FR 2983528

- FR 2939928